# EUROPEAN PATENT SPECIFICATION

(11) **EP 4 054 149 B1**
(45) Date of publication and mention of the grant of the patent: **25.11.2026**
(21) Application number: 20897237.2
(22) Date of filing: 04.12.2020
(51) Int. Cl.: H04L 41/0806, H04L 45/02, H04L 41/0895, H04L 61/58, H04L 69/324, H04L 45/00, H04L 12/46, H04L 101/622, H04L 61/103

(54) **METHOD AND APPARATUS FOR CONFIGURING AGING TIME OF MEDIA ACCESS CONTROL ADDRESS**
VERFAHREN UND VORRICHTUNG ZUR KONFIGURATION DER ALTERUNGSZEIT EINER MEDIENZUGRIFFSSTEUERUNGSADRESSE
PROCÉDÉ ET APPAREIL PERMETTANT DE CONFIGURER LE TEMPS DE VIEILLISSEMENT D'UNE ADRESSE DE COMMANDE D'ACCÈS AU SUPPORT (MAC)

(30) Priority: 06.12.2019 CN 201911239038
(43) Date of publication of application: 07.09.2022
(73) Proprietor: Huawei Technologies Co., Ltd., Longgang Shenzhen, Guangdong 518129 (CN)
(72) Inventor: SUN, Chunxia, Shenzhen, Guangdong 518129 (CN); ZHANG, Yaokun, Shenzhen, Guangdong 518129 (CN)
(74) Representative: Goddar, Heinz J.
(86) International application number: PCT/CN2020/134005
(87) International publication number: WO 2021/110150

(56) References cited:
- CN-A- 103 259 726
- CN-A- 105 790 996
- CN-A- 109 218 456
- CN-A- 109 218 456
- CN-A- 109 842 694
- CN-A- 109 842 694
- US-B1- 9 391 885
- US-B2- 10 313 153
- SAJASSI A ET AL: "BGP MPLS-Based Ethernet VPN; rfc7432.txt", BGP MPLS-BASED ETHERNET VPN; RFC7432.TXT, INTERNET ENGINEERING TASK FORCE, IETF; STANDARD, INTERNET SOCIETY (ISOC) 4, RUE DES FALAISES CH- 1205 GENEVA, SWITZERLAND, 18 February 2015 (2015-02-18), pages 1 - 56, XP015104549
- SANGLI D TAPPAN CISCO SYSTEMS Y REKHTER JUNIPER NETWORKS S: "BGP Extended Communities Attribute; rfc4360.txt", BGP EXTENDED COMMUNITIES ATTRIBUTE; RFC4360.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 February 2006 (2006-02-01), XP015044793

## Description

### TECHNICAL FIELD

This application relates to the communications field, and more specifically, to a method for configuring media access control address aging time and an apparatus.

### BACKGROUND

In a router network, media access control (MAC) address aging time of a layer-2 network device is usually less than address resolution protocol (ARP) entry aging time of a layer-3 gateway device. To avoid a case in which an unknown unicast packet is sent in a broadcast form because the MAC address aging time is less than the ARP entry aging time, in the conventional technology, the MAC address aging time of the layer-2 network device is manually adjusted. However, there may be as many as thousands of edge devices in an existing layer-2 network, and configuration workload is heavy.

CN 109218456 A discloses a method and device for processing the MAC address aging time table, and belongs to the technical field of communication. The method is applied to a layer-2 network device included in a layer-2 network, and includes: determining the aging time of a ARP table of a target layer-3 network device; changing the stored aging time information of the MAC address table to first aging time information based on the aging time of the ARP table, wherein the first aging time is greater than or equal to the aging time of the ARP table of the target layer-3 network device; transmitting the first aging time information to another layer-2 network device, other than layer-2 network device, in the layer-2 network in order that the another layer-2 network device changes the stored aging time information of the MAC address table to the first aging time information. The method and device avoids a situation that the aging time of the MAC address table of the layer-2 network device is less than the aging time of the ARP table of the layer-3 network device, so as to avoid network congestion and service loss.

CN 109842694 A discloses a method for synchronizing an MAC address, network equipment and a computer readable storage medium, and relates to the technical field of communication. The method is applied to a master device in the M-LAG. The M-LAG also comprises standby equipment; The method comprises the following steps of: receiving a negotiation request message sent by the standby device, wherein the negotiation request message carries the current configuration parameters of the standby equipment; receiving configuration parameters according to the received configuration parameters; local configuration parameters and preset configuration parameter negotiation rules are obtained; and determining the negotiated configuration parameters, storing the negotiated configuration parameters, and sending a negotiation response message to the standby device, the negotiation response message carrying the negotiated configuration parameters, so that the master device and the standby device perform MAC address synchronization processing according to the negotiated configuration parameters. By adopting the method, the consistency of the configuration information can be ensured, and the success rate of synchronizing the MAC address is improved.

US 10,313,153 B2 discloses a device in a network monitors Ethernet virtual private network (EVPN) traffic in the network for a plurality of media access control (MAC) addresses. The device generates a machine learning-based traffic model for the MAC addresses based on the monitored EVPN traffic. The device determines a timeout for a particular one of the MAC addresses based on traffic predicted by the machine learning-based traffic model for the particular MAC address. The device causes the particular MAC address to be timed out from one or more forwarding tables in the network based on the determined timeout.

Sajassi et al, RFC 7432, "BGP MPLS-Based Ethernet VPN", Feburary 2015, escribes procedures for BGP MPL S-based Ethernet VPNs (EVPN). The procedures described in RFC 7432, meet the requirements specified in Sajassi et al, RFC 7209, "Requirements for Ethernet VPN (EVPN)", May 2014. According to RFC 7432, the Provider Edge devices (PEs) advertise the MAC addresses learned from the CEs that are connected to them, along with an MPLS label, to other PEs in the control plane using Multiprotocol BGP (MP-BGP), which is known from Bates et al., RFC 4760, "Multiprotocol Extensions for BGP-4", January 2007. EVPN also uses the BGP extended community attributes as defined in Sangli et al., RFC 4360, "BGP Extended Communities Attribute", February 2006.

### SUMMARY

This application provides a method for configuring MAC address aging time and an apparatus, to simplify network deployment. The invention is defined by the independent claims. Advantageous embodiments are subject to the dependent claims.

### BRIEF DESCRIPTION OF DRAWINGS

FIG. 1 is a schematic flowchart of a method for configuring MAC address aging time according to an embodiment of this application;
FIG. 2 is a schematic diagram of a method for configuring MAC address aging time according to an embodiment of this application;
FIG. 3 is another schematic diagram of a method for configuring MAC address aging time according to an embodiment of this application;
FIG. 4 shows a packet format of a route type A according to an embodiment of this application;
FIG. 5 shows a field format of an attribute A in a packet #1 according to an embodiment of this application;
FIG. 6 is another schematic diagram of a method for configuring MAC address aging time according to an embodiment of this application;
FIG. 7 is another schematic diagram of a method for configuring MAC address aging time according to an embodiment of this application;
FIG. 8 is another schematic flowchart of a method for configuring MAC address aging time according to an embodiment of this application;
FIG. 9 is a schematic block diagram of a communications apparatus according to an embodiment of this application; and
FIG. 10 is a schematic diagram of a hardware structure of a communications apparatus according to an embodiment of this application.

### DESCRIPTION OF EMBODIMENTS

The following describes technical solutions of this application with reference to the accompanying drawings.

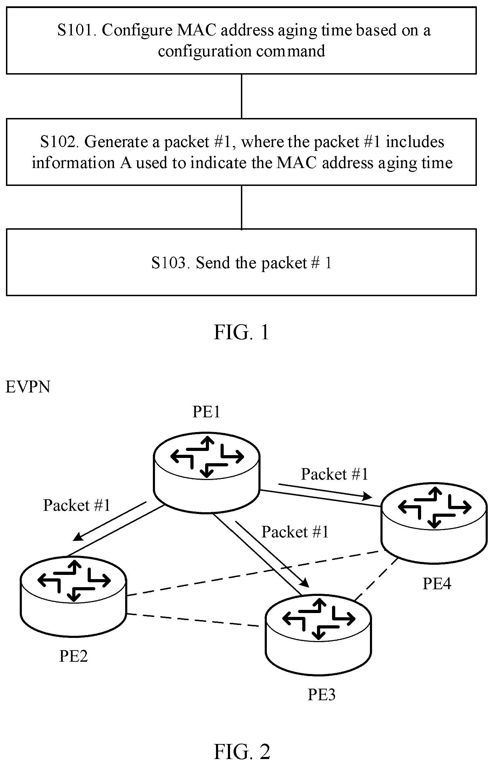

FIG. 1 is a schematic flowchart of a method for configuring MAC address aging time according to an embodiment of this application. The method in FIG. 1 is performed by a device A (that is, an example of a first device).

S101. Configure MAC address aging time based on a configuration command.

S102. Generate a packet #1, where the packet #1 is an Ethernet virtual private network (EVPN) protocol packet, that is, one of border gateway protocol (border gateway protocol, BGP) packets. The packet #1 includes information A indicating aging time of a MAC address for an EVPN, and the information A may also be referred to as aging time information.

S103. Send the packet #1.

After the MAC address aging time of the device A in the EVPN is reconfigured to a value K, the device A generates the packet #1 based on the value K, where the packet #1 includes the information A used to indicate the MAC address aging time. The information A is used to configure MAC address aging time of a device B (that is, an example of a second device) in the EVPN in which the device A is located. The value K is greater than ARP entry aging time of an internet protocol (internet protocol, IP) gateway in a layer-3 network. The device B is one or more devices in the EVPN that establish a BGP connection to the device A, that is, the device B is a BGP neighbor device of the device A.

A networking person (which may also be referred to as a network administrator, a networking administrator, an administrator, or the like) may manually input the configuration command for the MAC address aging time to the device A based on a networking status, for example, based on the ARP entry aging time of the gateway device in the layer-3 network connected to the EVPN. The MAC address aging time of the device A is configured, based on the configuration command, to the value K that is greater than the ARP entry aging time of the gateway device in the layer-3 network. Then, the device A sends the packet #1 to notify the device B in the EVPN to reconfigure the MAC address aging time. In this way, MAC address aging time of one device in a layer-2 network is manually modified, and the device sends a packet to indicate another device in the EVPN to modify MAC address aging time, so that MAC address aging time of each device in the EVPN is greater than the ARP entry aging time of the layer-3 gateway device, thereby effectively avoiding sending of an unknown unicast packet in a broadcast form, port congestion, and excessively high CPU usage that are caused because the MAC address aging time is less than the ARP entry aging time, and simplifying network deployment.

For example, as shown in FIG. 2, the device A is a provider edge (provider edge, PE) device PE1 in the EVPN, and the PE1 directly establishes a connection to a PE device in the EVPN. After MAC address aging time of the PE1 is configured to the value K by using the configuration command, the PE1 generates the packet #1 and sends the packet #1 to all PE devices PE2, PE3, and PE4 in the EVPN, that is, the device B in the EVPN is the PE2, the PE3, or the PE4. After receiving the packet #1, the PE2, the PE3, and the PE4 set respective MAC address aging time based on the information A in the packet #1.

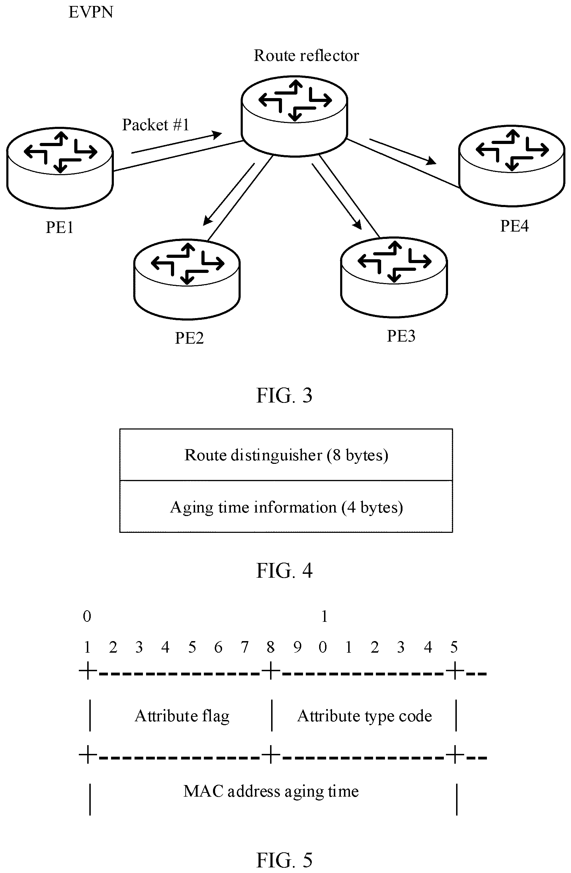

For another example, as shown in FIG. 3, the device A is a PE1 in the EVPN, and the PE1 establishes a connection relationship with all devices in the EVPN by using a route reflector (RR). In other words, the RR and the PE1 are BGP peers, that is, the RR is a neighbor device of the PE1, and both the RR and the device B (that is, a PE2, a PE3, or a PE4) in the EVPN are BGP neighbor devices. After MAC address aging time of the PE1 is configured to the value K by using the configuration command, the PE1 generates the packet #1 based on the value K and sends the packet #1 to the RR (that is, another example of the second device), and the RR forwards the packet #1 to the neighbor devices PE2, PE3, and PE4. After receiving the packet #1, the PE2, the PE3, and the PE4 set respective MAC address aging time based on the information A in the packet #1.

The device A may be any PE device in the EVPN. By way of example, and not limitation, the device A may be a PE device connected to the layer-3 network in the layer-2 network. In other words, the device A is a PE device at a metro egress in the EVPN.

The MAC address aging time of the device A is reconfigured by using a mac-address aging-time configuration command line. Conditions for generating the packet #1 and sending the packet #1 to a neighbor device by the device A include but are not limited to the following cases:

Case 1: The device A determines, depending on whether the configuration command includes information B, whether to advertise the MAC address aging time to the neighbor device. The information B is used to indicate the device A to advertise the configured MAC address aging time to the neighbor device. When the configuration command does not include the information B, it indicates that the MAC address aging time does not need to be advertised. Therefore, the device A does not generate the packet #1 after the MAC address aging time is modified. When the configuration command includes the information B, it indicates that the MAC address aging time needs to be advertised. Therefore, the device A generates the packet #1 based on the configured MAC address aging time and sends the packet #1 to the neighbor device.

For example, the information B is represented as "advertise mac-aging-time-routes". Using a virtual private network (virtual private network, VPN) instance evpn A as an example, a configuration model may be as follows:

```
        evpn vpn-instance evpnA
            route-distinguisher 100:1
            vpn-target 1:1 export-extcommunity
            vpn-target 1:1 import-extcommunity
            mac-address aging-time 100
        bgp 100
        peer 3.3.3.3 as-number 100
        peer 3.3.3.3 as connect-interface LoopBack 0
        #
            12vpn-family evpn
            peer 3.3.3.3 enable
            advertise mac-aging-time-routes
        
```

"mac-address aging-time 100" is for configuring the MAC address aging time to 100 seconds, "peer 3.3.3.3 as-number 100" is used to configure a peer autonomous system (autonomous system, AS) number of a peer 3.3.3.3 to 100, "peer 3.3.3.3 enable" indicates that a BGP function is enabled with a neighbor 3.3.3.3, and "advertise mac-aging-time-routes" indicates to advertise the MAC address aging time to the neighbor device. It should be noted that the foregoing is an example of the configuration model. When the MAC address aging time needs to be advertised, the configuration model includes the information B. Other command lines are merely examples and may or may not be included. This is not limited in this application.

Case 2: After the device A receives the configuration command for configuring the MAC address aging time, the device A generates the packet #1. In other words, if the MAC address aging time of the device A is reconfigured by using the configuration command, the device A generates the packet #1 and sends the packet #1 to the neighbor device.

Case 3: After the device A receives the configuration command for configuring the MAC address aging time, the device A compares with a value L of locally configured original MAC address aging time. When the value K is greater than the value L, the device A generates the packet #1 based on the value K, and then sends the packet #1. When the value K is less than the value L, the device A configures the local MAC address aging time to the value K and does not generate a packet.

In the solution of this application, the packet #1 may be used to transmit the information A in, but not limited to, one of the following forms:

### Form 1

The packet #1 is a packet of an EVPN route type A. The EVPN route type A is a route type for configuring the MAC address aging time, or the EVPN route type A indicates that the packet #1 is a packet for configuring the MAC address aging time, and the EVPN route type A may be referred to as a MAC address aging time route type. For example, as shown in FIG. 4, a route format may include a route distinguisher (RD) field and an aging time information field. The RD field is of 8 bytes, the aging time information field is used to configure the MAC address aging time, and the field may include 4 bytes. However, this application is not limited thereto.

In an example not forming part of the claimed invention, the route type A is a route that is in an EVPN type 1 route (that is, an Ethernet auto-discovery route type) and that is for configuring the MAC address aging time. In the conventional technology, the Ethernet auto-discovery route type includes two types of routes. One route is used for fast convergence (that is, ethernet auto-discovery per ES, EAD/ES), and the other route is used for error identification and path backup (that is, ethernet auto-discovery per EVI, EAD/EVI). Based on the conventional technology, the type A route is a newly added route in the Ethernet auto-discovery route type, that is, the route for configuring the MAC address aging time.

According to the invention, the type A route is a route of a newly numbered EVPN route type, for example, an EVPN route type 6. The EVPN route type 6 is a route type for configuring the MAC address aging time, and the number 6 is merely an example, and there may alternatively be another numbered route type.

According to the foregoing solution, the MAC address aging time is transmitted by using a dedicated route type for configuring the MAC address aging time. This avoids a case in which the MAC address aging time is repeatedly configured by transmitting other information.

### Form 2 (Form 2 is an example not forming part of the claimed invention)

An extended community attribute field in the packet #1 includes an attribute A, and the attribute A is used to transmit the information A, that is, the information A for configuring the MAC address aging time is carried in an extended community attribute in the packet #1. Optionally, a route type of the packet #1 is a MAC/IP route type. For example, as shown in FIG. 5, a byte format of the attribute A includes an attribute flag, the attribute flag includes an optionality bit, the optionality bit is used to indicate whether the attribute is an optional attribute or a mandatory attribute, and the attribute flag further includes a transitivity bit. The transitivity bit is used to indicate whether the attribute is transitive. The byte format of the attribute A includes an attribute type code, the attribute type code is used to identify that the attribute is an attribute for configuring the MAC address aging time, and the byte format of the attribute A includes the information A. However, this application is not limited thereto. For example, the device A sends the packet #1 carrying the attribute A. After receiving the packet #1, the device B determines, if the optionality bit in the attribute flag included in the packet #1 is set to "1", that the attribute is the optional attribute, determines, if the transitivity bit is set to 1, that the attribute is transitive, and then, determines, based on a type number, that the attribute is the attribute for configuring the MAC address aging time. The device B configures the MAC address aging time based on the attribute.

In this example not forming part of the claimed invention a packet format of an existing route type is reused to transmit the MAC address aging time, so that complexity of a packet format design is reduced.

The packet #1 does not carry route information for generating a forwarding entry. In other words, the packet #1 does not guide traffic forwarding.

In an implementation, two PE devices that are backups of each other are applied at the metro egress, to avoid service interruption between the layer-2 network and the layer-3 network that is caused by a failure of one of the PE devices. MAC address aging time may be configured on both the devices that are backups of each other. When one of the devices fails, a backup device can also keep the route from being withdrawn to ensure normal service running.

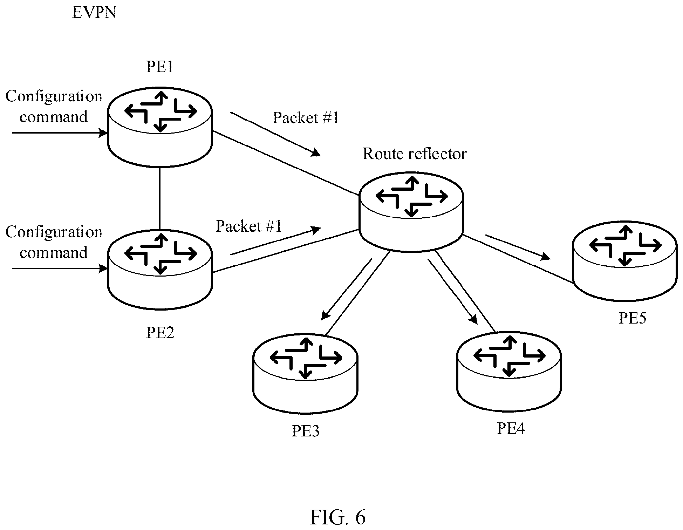

Optionally, all PE devices in an EVPN shown in FIG. 6 are fully connected by using a route reflector. A PE1 and a PE2 are two PE devices at a metro egress in the EVPN that are backups of each other. After MAC address aging time is manually configured on the PE1 and the PE2 by using a configuration command, one of the device sends a packet #1 to the route reflector or both the devices send packets #1 to the route reflector. Then, the route reflector forwards the packet #1 to a neighbor PE device of the route reflector, so that the MAC address aging time can be reconfigured on all the PE devices in the EVPN.

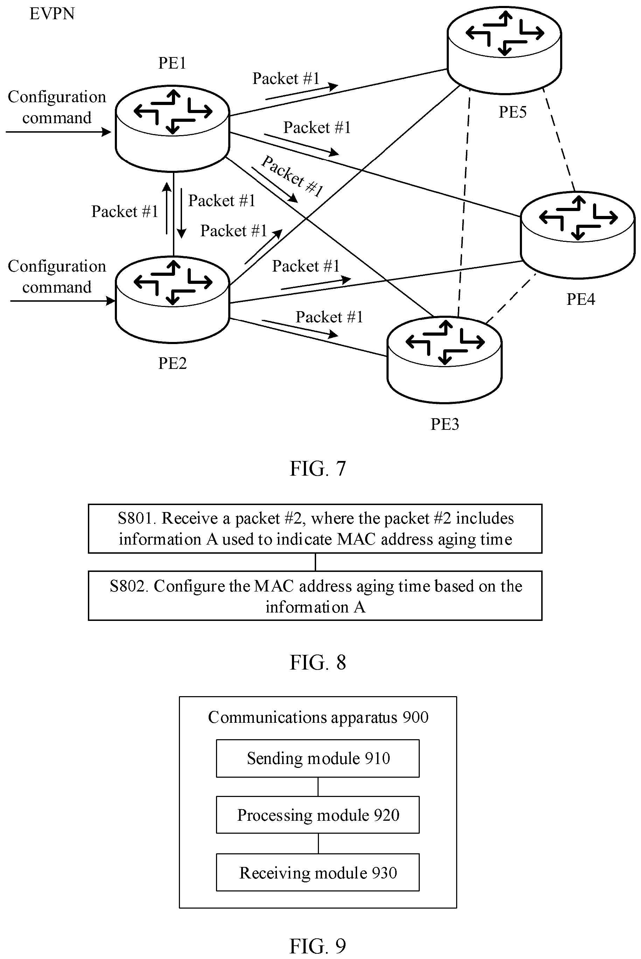

Optionally, PE devices in an EVPN shown in FIG. 7 are fully connected in a manner in which the PE devices in the EVPN are mutually connected. After MAC address aging time is manually configured on two PE devices PE1 and PE2 at a metro egress in the EVPN by using a configuration command, one of the PE1 and the PE2 sends a packet #1 to a connected neighbor device or both the devices send packets #1 to a neighbor device. That is, the PE1 sends the packet #1 to the PE2, a PE3, a PE4, and a PE5, and the PE2 sends the packet #1 to the PE1, the PE3, the PE4, and the PE5, so that the MAC address aging time can be reconfigured on all the PE devices in the EVPN.

On the other hand, after the PE devices in the EVPN are restarted or new PE devices are added to the EVPN, the PE devices can learn the route after establishing a BGP neighbor with an RR.

According to the solution of this application, MAC address aging time of an individual device in the layer-2 network is manually modified, and then MAC address aging time of another device in the EVPN is configured by using a packet that carries information for configuring the MAC aging time and that is sent by the device, thereby effectively avoiding sending of an unknown unicast packet in a broadcast form, port congestion, and excessively high CPU usage that are caused because the MAC address aging time is less than ARP entry aging time, and simplifying network deployment.

FIG. 8 is another schematic flowchart of a method for configuring MAC address aging time according to an example not forming part of the claimed invention. The method in FIG. 8 is performed by a device B (that is, an example of a second device).

It should be noted that, in this example, for a part that is the same as or similar to that in the embodiment in FIG. 1, refer to the foregoing description of the embodiment in FIG. 1. For brevity, details are not described herein again.

S801. Receive a packet #2, where the packet #2 is an EVPN protocol packet, that is, a BGP packet. The packet #2 includes information A used to indicate MAC address aging time.

The device B receives the packet #2 sent by a device A (that is, an example of a first device), and the packet #2 is the packet #1 in the embodiment in FIG. 1, or the device B receives the packet #2 sent by an RR (that is, another example of the first device), and the packet #2 is the packet #1 that is received by the RR from the device A and that is forwarded by the RR to the device B.

S802. Configure the MAC address aging time based on the information A.

In this example, content of the information A may include but is not limited to the following forms:
Form 1: The information A is a value K, that is, the information A is a value of the MAC address aging time that is configured by the device A.

In an implementation, after the device B receives the information A, the device B configures the value K as the MAC address aging time.

In another implementation, after the device B receives the information A, the device B compares the value K with a value P of locally configured MAC address aging time, and uses the larger one of the value K and the value P as the MAC address aging time. When the value K is greater than the value P, the value K is configured as the MAC address aging time. When the value K is less than the value P, the MAC address aging time remains unchanged, that is, the value P.

### Form 2: The information A is an offset A.

After the device B receives the information A, the device B configures a sum of the offset A and a value P of locally configured MAC address aging time as the MAC address aging time.

Optionally, the device A collects the MAC address aging time of the device B in the VPN, determines the offset A based on a value K and the MAC address aging time of the device B, and then generates a BGP packet. For example, the device A determines the offset A based on the MAC address aging time of the device B in the VPN, so that a sum of the MAC address aging time of the device B and the offset A is greater than the value K.

Form 3: The information A is an index value. The index value corresponds to a value Q of the MAC address aging time.

The device B determines, based on the index value, a value Q corresponding to the index value, and then configures the MAC address aging time based on the value Q. During delivery, the device B stores an index table for configuring the MAC address aging time. However, this application is not limited thereto.

In an implementation, the value Q is an optional value of the MAC address aging time, and the device B configures the value Q or the larger one of the value Q and a value P of local MAC address aging time as the MAC address aging time.

In another implementation, the value Q is an offset, and the device B configures a sum of the offset Q and a value P of locally configured MAC address aging time as the MAC address aging time.

It should be noted that a part or all of the embodiment in FIG. 2 and the embodiment in FIG. 8 may be implemented independently, or may be implemented in combination with each other to implement the described functions.

FIG. 9 is a schematic block diagram of a communications apparatus 900 according to an embodiment of this application. It should be understood that the communications apparatus 900 is merely an example. The communications apparatus provided in this embodiment of this application may further include other modules or units, may include modules having functions similar to those of modules in FIG. 9, or may not necessarily include all modules in FIG. 9.

In an implementation, the apparatus is applied in a device A, and the apparatus includes:
a processing module 920, configured to generate a first Ethernet virtual private network EVPN protocol packet, where the first EVPN protocol packet includes aging time information indicating aging time of a MAC address for an EVPN; and
a sending module 910, configured to send the first EVPN protocol packet to a device B or an RR.

The first EVPN protocol packet does not carry route information for generating a forwarding entry.

The route type of the first EVPN protocol packet indicates that the first EVPN protocol packet is a packet for configuring the MAC address aging time.

Device B or the RR is a BGP neighbor device of a first device.

In a possible design, the device A is a layer-2 network egress provider edge PE device.

In another implementation, the apparatus is applied in a device B, and the apparatus includes:
a receiving module 930, configured to receive a second Ethernet virtual private network EVPN protocol packet sent by a device A or an RR, where the second EVPN protocol packet includes aging time information indicating aging time of a media access control MAC address for an EVPN; and
a processing module 920, configured to configure MAC address aging time based on the aging time information.

The second EVPN protocol packet does not carry route information for generating a forwarding entry.

In a possible design, the aging time information is a first value of the MAC address aging time; and
that the device B configures the MAC address aging time based on the aging time information includes:
the device B configures the first value as the MAC address aging time.

The route type of the second EVPN protocol packet indicates that the second EVPN protocol packet is a packet for configuring the MAC address aging time.

The second device is a BGP neighbor device of the device A or the RR.

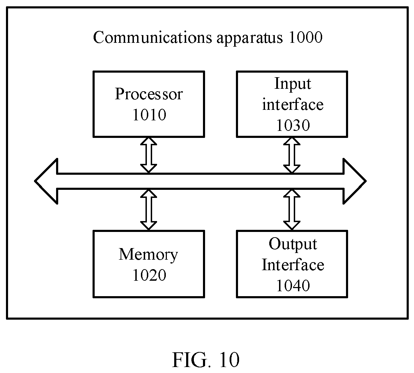

FIG. 10 is a schematic structural diagram of a communications apparatus 1000 according to an embodiment of this application. It should be understood that the communications apparatus 1000 shown in FIG. 10 is merely an example. The communications apparatus in this embodiment of this application may further include other modules or units, or may include modules having functions similar to those of modules in FIG. 10.

The communications apparatus 1000 may include one or more processors 1010, one or more memories 1020, and an input interface 1030. The apparatus 1000 may further include an output interface 1040. In a possible design, the input interface 1030 and the output interface 1040 may be integrated together, and are referred to as a transceiver interface. The memory 1020 is configured to store program code to be executed by the processor 1010. The processor 1010 may be integrated with the memory 1020, or the processor 1010 is coupled to the one or more memories 1020, and is configured to invoke instructions in the memory 1020.

In an embodiment, the processor 1010 may be configured to implement operations or steps that can be implemented by the processing module 920 in FIG. 9, and the input interface 1030 may be configured to implement operations or steps that can be implemented by the receiving module 930 in FIG. 9. The output interface 1040 may be configured to implement operations or steps that can be implemented by the sending module 910 in FIG. 9.

It should be understood that, the processor in this embodiment of this application may be a central processing unit (CPU). The processor may alternatively be another general-purpose processor, a digital signal processor (DSP), an application-specific integrated circuit (ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be further understood that the memory in this embodiment of this application may be a volatile memory or a nonvolatile memory, or may include a volatile memory and a nonvolatile memory. The nonvolatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM) that is used as an external cache. By way of example, and not limitative descriptions, random access memories (RAMs) in many forms may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DR RAM).

All or some of the foregoing embodiments may be implemented by software, hardware, firmware, or any combination thereof. When software is used to implement the embodiments, the foregoing embodiments may be implemented completely or partially in a form of a computer program product. The computer program product includes one or more computer instructions or computer programs. When the computer instructions or the computer programs are loaded and executed on a computer, the procedures or functions according to the embodiments of this application are all and partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in the embodiments of this application. The execution sequences of the processes should be determined based on functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions.

A person skilled in the art may clearly understand that, for the purpose of convenient and brief description, for detailed working processes of the foregoing system, apparatuses, and units, refer to corresponding processes in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or the units may be implemented in electronic, mechanical, or other forms.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Therefore, the protection scope of this application is defined by the claims.

## Claims

1. A method for configuring media access control, MAC, address aging time, comprising:
configuring MAC address aging time on a first device based on a configuration command at the first device, wherein said aging time is greater than the address resolution protocol, ARP, entry aging time of the gateway device in the layer-3 network connected to the Ethernet virtual private network, EVPN;
generating, by the first device, upon receiving said configuration change, a EVPN protocol packet, wherein the EVPN protocol packet comprises said aging time and wherein the EVPN protocol packet does not carry route information for generating a forwarding entry; and
sending, by the first device, the EVPN protocol packet to a second device in the EVPN to notify the second device to reconfigure its MAC address aging time to the aging time indicated in the EVPN protocol packet, wherein the first device is a layer-2 network egress provider edge, PE, device, wherein a route type of the EVPN protocol packet indicates that the EVPN protocol packet is a packet for configuring the MAC address aging time, wherein the second device is a border gateway protocol, BGP, neighbor device of the first device.

2. A method for configuring media access control, MAC, address aging time, comprising:
receiving, by a second device, a Ethernet virtual private network EVPN protocol packet sent by a first device, wherein the EVPN protocol packet comprises aging time, wherein said aging time is greater than the address resolution protocol, ARP, entry aging time of the gateway device in the layer-3 network connected to the EVPN, wherein the first device is a layer-2 network egress PE device, wherein the EVPN protocol packet is sent by the first device upon receiving a configuration change of the MAC address aging time at the first device, and wherein the EVPN protocol packet does not carry route information for generating a forwarding entry; and
configuring, by the second device, the MAC address aging time to the aging time indicated in the EVPN protocol packet, wherein a route type of the EVPN protocol packet indicates that the EVPN protocol packet is a packet for configuring the MAC address aging time, wherein the second device is a border gateway protocol, BGP, neighbor device of the first device.

3. A communications device, comprising a processor and a memory, wherein the memory is configured to store instructions, and the processor is configured to execute the instructions, to enable the communications device to perform the method according to claim 1, or enable the communications device to perform the method according to claim 2.

4. A computer storage medium, wherein the computer storage medium stores program instructions, and when the instructions are executed by a communications device, the communications device is enabled to perform the method according to claim 1, or the communications device is enabled to perform the method according to claim 2.

5. A system, comprising a first device and a second device, wherein the first device is a layer-2 network egress provider edge, PE, device, and wherein the first device is configured to perform the method according to claim 1, and the second device is configured to perform the method according to claim 2.

## Patentansprüche

1. Verfahren zum Konfigurieren einer Media-Access-Control(MAC)-Adressalterungszeit, das Folgendes umfasst:
Konfigurieren einer MAC-Adressalterungszeit auf einer ersten Vorrichtung basierend auf einem Konfigurationsbefehl auf der ersten Vorrichtung, wobei die Alterungszeit größer als die Address-Resolution-Protocol(ARP)-Eintragsalterungszeit der Gateway-Vorrichtung in dem Layer-3-Netzwerk ist, das mit dem virtuellen privaten Ethernet-Netzwerk, EVPN, verbunden ist;
Erzeugen, durch die erste Vorrichtung, bei einem Empfangen der Konfigurationsänderung, eines EVPN-Protokollpakets, wobei das EVPN-Protokollpaket die Alterungszeit umfasst und wobei das EVPN-Protokollpaket keine Routeninformationen zum Erzeugen eines Weiterleitungseintrags mitführt; und
Senden, durch die erste Vorrichtung, des EVPN-Protokollpakets an eine zweite Vorrichtung in dem EVPN, um die zweite Vorrichtung zu benachrichtigen, ihre MAC-Adressalterungszeit auf die in dem EVPN-Protokollpaket angegebene Alterungszeit umzukonfigurieren, wobei die erste Vorrichtung eine Layer-2-Netzwerkausgangs-Provider-Edge(PE)-Vorrichtung ist, wobei ein Routentyp des EVPN-Protokollpakets angibt, dass das EVPN-Protokollpaket ein Paket zum Konfigurieren der MAC-Adressalterungszeit ist, wobei die zweite Vorrichtung eine Border-Gateway-Protocol(BGP)-Nachbarvorrichtung der ersten Vorrichtung ist.

2. Verfahren zum Konfigurieren der Media-Access-Control(MAC)-Adressalterungszeit, das Folgendes umfasst:
Empfangen, durch eine zweite Vorrichtung, eines virtuellen privaten Ethernet-Netzwerk(EVPN)-Protokollpakets, das durch eine erste Vorrichtung gesendet wird, wobei das EVPN-Protokollpaket eine Alterungszeit umfasst, wobei die Alterungszeit größer als die Address-Resolution-Protocol(ARP)-Eintragsalterungszeit der Gateway-Vorrichtung in dem mit dem EVPN verbundenen Layer-3-Netzwerk ist, wobei die erste Vorrichtung eine Layer-2-Netzwerkausgangs-PE-Vorrichtung ist, wobei das EVPN-Protokollpaket durch die erste Vorrichtung bei dem Empfangen einer Konfigurationsänderung der MAC-Adressalterungszeit auf der ersten Vorrichtung gesendet wird, und wobei das EVPN-Protokollpaket keine Routeninformationen zum Erzeugen eines Weiterleitungseintrags mitführt; und Konfigurieren, durch die zweite Vorrichtung, der MAC-Adressalterungszeit auf die in dem EVPN-Protokollpaket angegebene Alterungszeit, wobei ein Routentyp des EVPN-Protokollpakets angibt, dass das EVPN-Protokollpaket ein Paket zum Konfigurieren der MAC-Adressalterungszeit ist, wobei die zweite Vorrichtung eine Border-Gateway-Protocol(BGP)-Nachbarvorrichtung der ersten Vorrichtung ist.

3. Kommunikationsvorrichtung, die einen Prozessor und einen Speicher umfasst, wobei der Speicher konfiguriert ist, um Anweisungen zu speichern, und der Prozessor konfiguriert ist, um die Anweisungen auszuführen, um es der Kommunikationsvorrichtung zu ermöglichen, das Verfahren nach Anspruch 1 durchzuführen, oder es der Kommunikationsvorrichtung zu ermöglichen, das Verfahren nach Anspruch 2 durchzuführen.

4. Computerspeicherungsmedium, wobei das Computerspeicherungsmedium Programmanweisungen speichert, und wenn die Anweisungen durch eine Kommunikationsvorrichtung ausgeführt werden, es der Kommunikationsvorrichtung ermöglicht wird, das Verfahren nach Anspruch 1 durchzuführen, oder es der Kommunikationsvorrichtung ermöglicht wird, das Verfahren nach Anspruch 2 durchzuführen.

5. System, das eine erste Vorrichtung und eine zweite Vorrichtung umfasst, wobei die erste Vorrichtung eine Layer-2-Netzwerkausgangs-Provider-Edge(PE)-Vorrichtung ist, und wobei die erste Vorrichtung konfiguriert ist, um das Verfahren nach Anspruch 1 durchzuführen, und die zweite Vorrichtung konfiguriert ist, um das Verfahren nach Anspruch 2 durchzuführen.

## Revendications

1. Procédé permettant de configurer un temps de vieillissement d'adresse de commande d'accès au support, MAC, comprenant :
la configuration d'un temps de vieillissement d'adresse MAC sur un premier dispositif sur la base d'une commande de configuration au niveau du premier dispositif, dans lequel ledit temps de vieillissement est supérieur au temps de vieillissement d'entrée de protocole de résolution d'adresse, ARP, du dispositif passerelle dans le réseau de couche 3 connecté au réseau privé virtuel Ethernet, EVPN ;
la génération, par le premier dispositif, lors de la réception dudit changement de configuration, d'un paquet de protocole EVPN, dans lequel le paquet de protocole EVPN comprend ledit temps de vieillissement et dans lequel le paquet de protocole EVPN ne porte pas d'informations de route permettant de générer une entrée d'acheminement ; et
l'envoi, par le premier dispositif, du paquet de protocole EVPN à un second dispositif dans l'EVPN pour informer le second dispositif qu'il doit reconfigurer son temps de vieillissement d'adresse MAC au temps de vieillissement indiqué dans le paquet de protocole EVPN,
dans lequel le premier dispositif est un dispositif de périphérie de fournisseur, PE, de sortie de réseau de couche 2, dans lequel un type de route du paquet de protocole EVPN indique que le paquet de protocole EVPN est un paquet permettant de configurer le temps de vieillissement d'adresse MAC, dans lequel le second dispositif est un dispositif voisin de protocole de passerelle frontière, BGP, du premier dispositif.

2. Procédé permettant de configurer un temps de vieillissement d'adresse de commande d'accès au support, MAC, comprenant :
la réception, par un second dispositif, d'un paquet de protocole de réseau privé virtuel Ethernet EVPN envoyé par un premier dispositif, dans lequel le paquet de protocole EVPN comprend un temps de vieillissement, dans lequel ledit temps de vieillissement est supérieur au temps de vieillissement d'entrée de protocole de résolution d'adresse, ARP, du dispositif passerelle dans le réseau de couche 3 connecté à l'EVPN, dans lequel le premier dispositif est un dispositif PE de sortie de réseau de couche 2, dans lequel le paquet de protocole EVPN est envoyé par le premier dispositif lors de la réception d'un changement de configuration du temps de vieillissement d'adresse MAC au niveau du premier dispositif, et dans lequel le paquet de protocole EVPN ne porte pas d'informations de route permettant de générer une entrée d'acheminement ; et
la configuration, par le second dispositif, du temps de vieillissement d'adresse MAC au temps de vieillissement indiqué dans le paquet de protocole EVPN, dans lequel un type de route du paquet de protocole EVPN indique que le paquet de protocole EVPN est un paquet permettant de configurer le temps de vieillissement d'adresse MAC, dans lequel le second dispositif est un dispositif voisin de protocole de passerelle frontière, BGP, du premier dispositif.

3. Dispositif de communication, comprenant un processeur et une mémoire, dans lequel la mémoire est configurée pour stocker des instructions, et le processeur est configuré pour exécuter les instructions, pour permettre au dispositif de communication de mettre en œuvre le procédé selon la revendication 1, ou permettre au dispositif de communication de mettre en œuvre le procédé selon la revendication 2.

4. Support de stockage informatique, dans lequel le support de stockage informatique stocke des instructions de programme, et lorsque les instructions sont exécutées par un dispositif de communication, le dispositif de communication est habilité à mettre en œuvre le procédé selon la revendication 1, ou le dispositif de communication est habilité à mettre en œuvre le procédé selon la revendication 2.

5. Système, comprenant un premier dispositif et un second dispositif, dans lequel le premier dispositif est un dispositif de périphérie de fournisseur, PE, de sortie de réseau de couche 2, et dans lequel le premier dispositif est configuré pour mettre en œuvre le procédé selon la revendication 1, et le second dispositif est configuré pour mettre en œuvre le procédé selon la revendication 2.
